# EUROPÄISCHE PATENTSCHRIFT

(11) **EP 1 883 661 B1**
(45) Veröffentlichungstag und Bekanntmachung des Hinweises auf die Patenterteilung: **24.11.2010**
(21) Anmeldenummer: 06755205.9
(22) Anmeldetag: 16.05.2006
(51) Int. Cl.: C08F 220/26, C08F 290/06, C08F 290/14, C08J 3/28, C08K 3/36, C08K 5/101, C08L 101/06, C09D 4/06, C09D 5/00, C09D 5/08

(54) **BESCHICHTUNGSSTOFF, VERFAHREN ZU SEINER HERSTELLUNG UND SEINE VERWENDUNG ZUR HERSTELLUNG HAFTFESTER, FARB- UND/ODER EFFEKTGEBENDER BESCHICHTUNGEN**
COATING MATERIAL METHOD FOR PRODUCTION AND USE THEREOF FOR THE PRODUCTION OF ADHESIVE TONE AND/OR EFFECT-GENERATING COATINGS
MATIERE DE REVETEMENT, PROCEDE DE PRODUCTION DE CETTE MATIERE ET UTILISATION DE LADITE MATIERE POUR PRODUIRE DES REVETEMENTS ADHESIFS DE COULEUR ET/OU A EFFETS

(30) Priorität: 27.05.2005 DE 102005024381
(43) Veröffentlichungstag der Anmeldung: 06.02.2008
(73) Patentinhaber: BASF Coatings GmbH, 48165 Münster (DE)
(72) Erfinder: ALLARD, Maxime, 67120 Dachstein (FR); KAUFFER, Dominique, 48317 Drensteinfurt (DE)
(74) Vertreter: Leifert & Steffan
(86) Internationale Anmeldenummer: PCT/EP2006/062333
(87) Internationale Veröffentlichungsnummer: WO 2006/125734

(56) Entgegenhaltungen:
- GB-A- 989 201
- US-A1- 2003 072 943
- ANONYMUS: "Technical data sheet CN152" SARTOMER TECHNICAL DATASHEETS, [Online] Dezember 2000 (2000-12), Seite 2450, XP002391755 Gefunden im Internet: URL:http://www.sartomer.com/wpapers/2450.p df> [gefunden am 2006-07-24]
- ANONYMUS: "Technical Data Sheet: CN131B" SARTOMER TECHNICAL DATASHEETS, [Online] August 2003 (2003-08), Seite 2564, XP002391756 Gefunden im Internet: URL:http://www.sartomer.com/wpapers/2564.p df> [gefunden am 2006-07-24]
- DATABASE CA [Online] CHEMICAL ABSTRACTS SERVICE, COLUMBUS, OHIO, US; 4. Februar 1989 (1989-02-04), SATO, TOSHIAKI ET AL: "Activated energy beam-curable coating compositions with improved adhesion" XP002395573 gefunden im STN Database accession no. 1989:40580 & JP 63 146968 A (TOYO INK MFG. CO., LTD., JAPAN) 18. Juni 1988 (1988-06-18)

## Beschreibung

### Gebiet der Erfindung

Die vorliegende Erfindung betrifft einen neuen, mit aktinischer Strahlung härtbaren Beschichtungsstoff. Außerdem betrifft die vorliegende Erfindung ein neues Verfahren zur Herstellung eines mit aktinischer Strahlung härtbaren Beschichtungsstoffs. Des Weiteren betrifft die vorliegende Erfindung die Verwendung des neuen Beschichtungsstoffs oder des mit Hilfe des neuen Verfahrens hergestellten Beschichtungsstoffs für die Herstellung haftfester, farb- und/oder effektgebender Beschichtungen, insbesondere Coils-Coatings, speziell Decklackschichten (Top Coats) auf Primerschichten.

### Stand der Technik

Haftfeste, farb- und/oder effektgebende Beschichtungen auf Metallbändern oder Coils, insbesondere aus den üblichen und bekannten Gebrauchsmetallen, wie Zink, Aluminium oder blanker, galvanisierter, elektroverzinkter und phosphatierter Stahl, werden vorzugsweise mit Hilfe des Coils-Coating-Verfahrens (Römpp Lexikon Lacke und Druckfarben, Georg Thieme Verlag, Stuttgart, New York, 1998, Seite 617, »Walzlackierung«, und Seite 55, »Bandbeschichtung«; A. Goldschmidt und H.-J. Streitberger, BASF-Handbuch Lackiertechnik, Vincentz Verlag, Hannover, 2002, »4.2.1.2 Streichen, Rollen, Walz- Flut- und Gießverfahren (Lacke direkt zum Objekt)«, Seiten 521 bis 527, insbesondere 523, und »7.4 Coil Coating«, Seiten 751 bis 756 ) hergestellt.

Sollen hoch pigmentierte, nur schwach glänzende und/oder matte Decklackierungen ("Topcoats") hergestellt werden, empfiehlt es sich, hierfür mit aktinischer Strahlung härtbare Beschichtungsstoffe zu verwenden, die vorzugsweise mit Elektronenstrahlung (ESH) (vgl. z. B. A. Goldschmidt und H.-J. Streitberger, BASF-Handbuch Lackiertechnik, Vincentz Verlag, Hannover, 2002, Seiten 638 bis 641) rasch gehärtet werden können. Wegen des hohen Pigmentgehalts ist eine Härtung mit UV-Strahlung nicht oder nur sehr schlecht möglich.

Coil-Coatings-Verfahren zur Herstellung von farb- und/oder effektgebenden Beschichtungen, bei denen zunächst eine Primerschicht auf die Coils aufgetragen und partiell oder vollständig gehärtet wird, wonach man eine Decklackschicht appliziert und diese gegebenenfalls gemeinsam mit der Primerschicht vollständig mit aktinischer Strahlung härtet, sind bekannt.

Hier und im Folgenden ist unter aktinischer Strahlung elektromagnetische Strahlung, wie nahes Infrarot (NIR), sichtbares Licht, UV-Strahlung, Röntgenstrahlung und Gammastrahlung, insbesondere UV-Strahlung, sowie Korpuskularstrahlung, wie Elektronenstrahlung, Betastrahlung, Alphastrahlung, Protonenstrahlung und Neutronenstrahlung, insbesondere Elektronenstrahlung, zu verstehen.

Beispielsweise wird bei dem aus dem amerikanischen Patent US 3,959,521 bekannten Verfahren zunächst eine Primerschicht auf die Coils appliziert, die olefinisch ungesättigte Doppelbindungen und freie Isocyanatgruppen enthält. Die Primerschicht kann mit Elektronenstrahlung oder UV-Strahlung gehärtet werden, wodurch die Primerlackierung resultiert. Auf die Primerlackierung wird ein im Wesentlichen lösemittelfreier, pigmentierter Decklack oder Topcoat-Beschichtungsstoff auf der Basis von Polyestern, die zwei Acrylatgruppen enthalten, appliziert. Die resultierende Decklackschicht wird mit Elektronenstrahlung gehärtet, wodurch die Decklackierung oder der Topcoat resultiert.

Bei dem aus der deutschen Patentanmeldung DE 44 21 558 A1 bekannten analogen Verfahren enthält der pigmentierte Decklack Acrylatgruppen enthaltende Präpolymere, wie Polyurethan-, Polyester-, Polyether-, Epoxy- oder Vollacrylate oder Mischungen hiervon, die mit niedrigviskosen Reaktivverdünnern vermischt sein können. Der Decklack kann noch nicht näher spezifizierte anorganische, organische oder metallische Füllstoffe, Mattierungsmittel, rheologische Additive, Wachse, Verlaufsmittel, Gleitmittel, Entlüfter, Entschäumer, Haftverbesserer, Dispergierhilfsmittel, Benetzungsmittel, Antiabsetzmittel, Antistatika, Stabilisatoren, Lichtschutzmittel, Korrosionsschutzmittel und weitere, dem Fachmann bekannte Stoffe, einzeln oder in Mischung enthalten.

Bei dem aus der internationalen Patentanmeldung WO 01/32321 A2 bekannten analogen Verfahren wird ein mit UV-Strahlung oder Elektronenstrahlung härtbarer Decklack auf eine thermisch härtbare oder thermisch gehärtete Basislackschicht appliziert. Der Decklack enthält Oligomere oder Polymere, die Acrylat-, Styrol-, Vinyl- und/oder Allylgruppen, vorzugsweise Acrylatgruppen, enthalten. Vorzugsweise werden Polyacrylate, Urethanacrylate, Epoxyacrylate, Polyesteracrylate und/oder Aminoacrylate verwendet. Der Decklack kann lösemittelfrei sein oder Lösemittel enthalten. Außerdem kann er Reaktivverdünner (Monomere), wie Isobornylacrylat u.a., und Haftvermittler enthalten.

Die bekannten Verfahren liefern farb- und/oder effektgebende Beschichtungen, die haftfest, hart, flexibel und verformbar sein und einen guten Korrosionsschutz bieten sollen.

Die bekannten Coil-Coating-Verfahren müssen aber hinsichtlich ihres Energieverbrauchs und ihrer Bandgeschwindigkeit weiter verbessert werden, um den stetig wachsenden Ansprüchen des Marktes, insbesondere der Coil Coater zu genügen.

Die hierbei eingesetzten Beschichtungsstoffe müssen in ihrer Herstellung, Lagerstabilität und Handhabung, inklusive ihrer Applikation, ebenfalls stetig weiter verbessert werden.

Desgleichen müssen die hiermit hergestellten, bekannten, farb- und/oder effektgebenden Beschichtungen ebenfalls in ihrer Härte, Flexibilität, Verformbarkeit, Haftung zum Substrat, Zwischenschichthaftung und Korrosionsschutzwirkung weiter verbessert werden, um den gleichfalls stetig wachsenden Ansprüchen der industriellen Kunden der Coil Coater zu genügen.

### Aufgabenstellung

Aufgabe der vorliegenden Erfindung ist es, einen neuen, pigmentierten, mit aktinischer Strahlung, insbesondere Elektronenstrahlung, härtbaren, von organischen Lösemitteln im wesentlichen oder völlig freien, flüssigen Beschichtungsstoff bereitzustellen, der die Nachteile des Standes der Technik nicht mehr länger aufweist, sondern der sich leicht herstellen lässt, der hochreaktiv ist und einen hohen Pigmentgehalt aufweist und dennoch lagerstabil ist, der sich besonders leicht und problemlos insbesondere im Rahmen des Coil-Coating-Verfahrens applizieren lässt und bei niedrigen Härtungstemperaturen sehr rasch und ohne Emission flüchtiger organischer Verbindungen ausgehärtet werden kann. Insbesondere soll der neue Beschichtungsstoff kein oder nur ein sehr geringes thixotropes Verhalten zeigen.

Die hieraus hergestellten Beschichtungen, insbesondere die Coil-Coatings, speziell die Decklackierungen oder Topcoats, sollen eine besonders hohe Zwischenschichthaftung zu den darunter liegenden Beschichtungen, insbesondere den Primerlackierungen, und eine hervorragende Korrosionsschutzwirkung haben. Sie sollen besonders hart, besonders flexibel und besonders gut verformbar sein. Sie sollen einen besonders hohen Pigmentgehalt und eine hohe Schichtdicke aufweisen, ohne dass dabei Beschichtungsstörungen auftreten. Nicht zuletzt sollen sie einen sehr guten Mattierungseffekt zeigen.

Insbesondere sollen die neuen Beschichtungen, insbesondere die neuen Coil Coatings, speziell die Decklackierungen oder Topcoats, mindestens die ECCA (European Coil Coating Association)-Klassifizierung 6 (vgl. A. Goldschmidt und H.-J. Streitberger, BASF-Handbuch Lackiertechnik, Vincentz Verlag, Hannover, 2002, »7.4 Coil Coating«, Seiten 751 bis 756, insbesondere 754) erreichen, d. h., insbesondere sollen sie bei einer Schichtdicke von 20 µm im T-Bend-Test einen Wert ≤ 1,5 und im Tape-Test einen Wert ≤ 0,5 erzielen. Zudem sollen sie einen gleichmäßigen matten Glanz (60°) von 30 bis 40% aufweisen und im Salzsprühtest eine Korrosionsfestigkeit von mindestens 21 Tagen haben.

Dieses besonders vorteilhafte anwendungstechnische Eigenschaftsprofil der aus dem neuen Beschichtungsstoff hergestellten neuen Beschichtungen soll auch dann noch erzielt werden können, wenn der neue Beschichtungsstoff mit Hilfe der ESH, insbesondere unter inerten Bedingungen, ausgehärtet wird.

### Lösung

Demgemäß wurde der neue, mit aktinischer Strahlung härtbare, von organischen Lösemitteln im Wesentlichen oder völlig freie, flüssige Beschichtungsstoff gefunden, enthaltend
(A) mindestens zwei Verbindungen der allgemeinen Formel I:

   X-O-Y(-OH)-Z-Gr (I),

   worin die Variablen die folgende Bedeutung haben:
   X aromatischer Rest mit 6 bis 14 Kohlenstoffatomen, heterocyclischer aromatischer Rest mit 5 bis 20 Ringatomen oder Alkylrest mit 6 bis 30 Kohlenstoffatomen,
   Y dreibindiger organischer Rest,
   Z verküpfende funktionelle Gruppe und
   Gr organischer Rest mit mindestens einer mit aktinischer Strahlung aktivierbare Gruppe, die mindestens eine mit aktinischer Strahlung aktivierbare Kohlenstoff-Kohlenstoff-Doppelbindung enthält;
   mit der Maßgabe, dass mindestens eine der mindestens zwei Verbindungen (A) einen aromatischen oder heterocyclischen aromatischen Rest X (= Verbindung A1) und mindestens eine der mindestens zwei Verbindungen (A) einen Alkylrest. X (= Verbindung A2) aufweisen;
(B) mindestens ein mit aktinischer Strahlung aktivierbares Oligomer und/oder Polymer, ausgewählt aus der Gruppe, bestehend aus Oligo- und Polyurethanen und Oligo- und Polyestern, die Im statistischen Mittel mindestens zwei mit aktinischer Strahlung aktivierbare Gruppen enthalten;
(C) mindestens einen Bestandteil, ausgewählt aus der Gruppe, bestehend aus farb- und/oder effektgebenden Pigmenten;
(D) mindestens ein Wachs;
(E) mindestens ein Mattlerungsmittel und
(F) mindestens Polysiloxen -Additiv, enthaltend mindestens Im statistischen Mittel mindestens einer mit aktinischer Strahlung aktivierbaren Gruppe.

Im Folgenden wird der neue Beschichtungsstoff als »erfindungsgemäßer Beschichtungsstoff« bezeichnet.

Außerdem wurde das neue Verfahren zur Herstellung des erfindungsgemäßen Beschichtungsstoffs gefunden, bei dem man die Bestandteile (A) bis (F) des erfindungsgemäßen Beschichtungsstoffs miteinander vermischt und die resultierende Mischung homogenisiert.

Im Folgenden wird das neue Verfahren als »erfindungsgemäßes Verfahren« bezeichnet.

Weitere Erfindungsgegenstände gehen aus der Beschreibung hervor.

### Die Vorteile der erfindungsgemäßen Lösung

Im Hinblick auf den Stand der Technik war es überraschend und für den Fachmann nicht vorhersehbar, dass die Aufgabe, die der vorliegenden Erfindung zugrunde lag, mit Hilfe des erfindungsgemäßen Beschichtungsstoffs und des erfindungsgemäßen Verfahrens gelöst werden konnte.

Insbesondere war es überraschend, dass der erfindungsgemäße Beschichtungsstoff die Nachteile des Standes der Technik nicht mehr länger aufwies, sondern sich leicht und sehr gut reproduzierbar herstellen ließ, wobei das erfindungsgemäße Verfahren eine besonders wirtschaftliche und umweltfreundliche Herstellung ermöglichte.

Der erfindungsgemäße Beschichtungsstoff war hochreaktiv und wies auch bei einem besonders hohen Pigmentgehalt eine hervorragende Lagerstabilität und Transportfähigkeit auf. Er zeigte kein oder nur ein sehr geringes, d. h. die Handhabung und die Applikation nicht störendes, thixotropes Verhalten und konnte besonders leicht und problemlos insbesondere im Rahmen des Coils-Coatings-Verfahrens appliziert und bei niedrigen Härtungstemperaturen sehr rasch und ohne Emission flüchtiger organischer Verbindungen ausgehärtet werden.

Die hieraus hergestellten neuen Beschichtungen, insbesondere die neuen Coil-Coatings, speziell die neuen Decklackierungen oder Topcoats, hatten eine besonders hohe Zwischenschichthaftung zu den darunter liegenden Beschichtungen, insbesondere den Primerlackierungen, und eine hervorragende Korrosionsschutzwirkung. Sie waren besonders hart, besonders flexibel und besonders gut verformbar. Sie konnten einen besonders hohen Pigmentgehalt und eine hohe Schichtdicke aufweisen, ohne dass dabei Beschichtungsstörungen auftraten. Nicht zuletzt zeigten sie einen sehr guten Mattierungseffekt.

Insbesondere erreichten die neuen Beschichtungen, insbesondere die neuen Coil Coatings, speziell die Decklackierungen oder Topcoats, mindestens die ECCA (European Coil Coating Association)-Klassifizierung 6 (vgl. A. Goldschmidt und H.-J. Streitberger, BASF-Handbuch Lackiertechnik, Vincentz Verlag, Hannover, 2002, »7.4 Coil Coating«, Seiten 751 bis 756, insbesondere 754), d. h., insbesondere erzielten sie bei einer Schichtdicke von 20 µm im T-Bend-Test einen Wert ≤ 1,5 und im Tape-Test einen Wert ≤ 0,5. Zudem wiesen sie einen gleichmäßigen matten Glanz (60°) von 30 bis 40% auf. Im Salzsprühtest zeigten sie eine Korrosionsfestigkeit von mindestens 21 Tagen.

Dieses besonders vorteilhafte anwendungstechnische Eigenschaftsprofil der aus dem erfindungsgemäßen Beschichtungsstoff hergestellten erfindungsgemäßen Beschichtungen wurde insbesondere auch dann erzielt, wenn der Beschichtungsstoff mit Hilfe der ESH, insbesondere unter inerten Bedingungen, ausgehärtet wurde.

Überraschenderweise wiesen die erfindungsgemäßen Beschichtungen auch ohne Lichtschutzmittel eine hohe Witterungsbeständigkeit und Vergilbungsbeständigkeit auf.

### Ausführliche Beschreibung der Erfindung

Der erfindungsgemäße Beschichtungsstoff ist flüssig, d. h., er enthält zwar feste, nichtflüssige Bestandteile, er ist aber bei Raumtemperatur und unter den üblichen und bekannten Bedingungen der Herstellung, der Lagerung und der Applikation in einem fluiden Zustand, sodass er mit Hilfe der üblichen und bekannten, beim Coil-Coating-Verfahren angewandten Applikationsmethoden verarbeitet werden kann.

Der erfindungsgemäße Beschichtungsstoff kann bei entsprechender Zusammensetzung als eine Wasser-in-Öl-Dispersion vorliegend, bei der die diskontinuierliche wässrige Phase in der kontinuierlichen organischen Phase feinteilig dispergiert ist. Der Durchmesser der Tröpfchen der wässrigen Phase kann breit variieren; vorzugsweise liegt er bei 10 nm bis 1000 µm, insbesondere 100 nm bis 800 µm. Die Bestandteile des erfindungsgemäßen Beschichtungsstoffs sind dann ihrer Hydrophilie oder Hydrophobie (vgl. Römpp Online, 2002, »Hydrophobie«, »Hydrophilie«) entsprechend über die wässrige Phase und organischen Phase verteilt oder liegen als separate feste Phase vor.

Der erfindungsgemäße Beschichtungsstoff bzw. seine wässrige Phase kann als Wasser-in-Öl Dispersion vorzugsweise einen pH-Wert < 5, vorzugsweise < 4 und insbesondere von 3 bis 3,5 aufweisen.

Der erfindungsgemäße Beschichtungsstoff ist im Wesentlichen oder völlig frei von organischen Lösemitteln. D. h., dass sein Gehalt an organischen Lösemitteln < 5, vorzugsweise < 3 und bevorzugt < 1 Gew.-% ist. Insbesondere liegt der Gehalt unterhalb der Nachweisgrenzen der üblichen und bekannten qualitativen und quantitativen Nachweismethoden für organische Lösemittel.

Der erfindungsgemäße Beschichtungsstoff enthält mindestens zwei, insbesondere zwei, Verbindungen (A) der allgemeinen Formel I:

X-O-Y(-OH)-Z-Gr (I).

Hierin haben die Variablen die folgende Bedeutung:
- X: aromatischer Rest mit 6 bis 14, vorzugsweise 6 bis 10, Kohlenstoffatomen, heterocyclischer aromatischer Rest mit 5 bis 20, vorzugsweise 6 bis 10, Ringatomen oder Alkylrest mit 6 bis 30, vorzugsweise 8 bis 20, insbesondere 10 bis 16, Kohlenstoffatomen; bevorzugt aromatischer Rest mit 6 bis 10 Kohlenstoffatomen oder Alkylrest, mit 10 bis 16 Kohlenstoffatomen; insbesondere Phenylrest oder Laurylrest;
- Y: dreibindiger organischer Rest, vorzugsweise aliphatischer Rest, vorzugsweise aliphatischer Rest mit drei Kohlenstoffatomen, insbesondere 1,2,3-Propantriyl;
- Z: verküpfende funktionelle Gruppe, vorzugsweise ausgewählt aus der Gruppe, bestehend aus Ether-, Thioether-, Carbonsäureester-, Thiocarbonsäureester-, Carbonat-, Thiocarbonat-, Phosphorsäureester-, Thiophosphorsäureester-, Phosphonsäureester-, Thiophosphonsäureester-, Phosphit-, Thiophosphit-, Sulfonsäureester-, Amid-, Amin-, Thioamid-, Phosphorsäureamid-, Thiophosphorsäureamid-, Phosphonsäureamid-, Thiophosphonsäureamid-, Sulfonsäureamid-, Imid-, Urethan-, Hydrazid-, Harnstoff-, Thioharnstoff-, Carbonyl-, Thiocarbonyl-, Sulfon-, Sulfoxid- oder Siloxangruppen, bevorzugt Ether-, Carbonsäureester-, Carbonat-, Carbonsäureamid-, Harnstoff-, Urethan-, Imid- und Carbonatgruppen, besonders bevorzugt Carbonsäureestergruppe und Insbesondere Carbonsäureestergruppe, die mit den Resten Y und Gr gemäß der allgemeinen Formel II:

>Y-O-(O=)C-Gr (II),

verknüpft ist; und
- Gr: organischer Rest mit mindestens einer, Insbesondere einer, mit aktinischer Strahlung aktivierbare Gruppe , <----> ;
mit der Maßgabe, dass mindestens eine, insbesondere eine, der mindestens zwei, insbesondere zwei, Verbindungen (A) einen erometischen oder heterocyclischen aromatischen, Insbesondere aromatischen, Rest X (= Verbindung A1) und mindestens eine, insbesondere eine, der mindestens zwei, insbesondere zwei, Verbindungen (A) einen Alkylrest X (= Verbindung A2) aufweisen.

Die mit aktinischer Strahlung aktivierbaren Gruppen enthalten mindestens eine, insbesondere eine, mit aktinischer Strahlung aktivierbare Kohlenstoff-Kohlenstoff-Doppelbindung.

Vorzugsweise sind die Doppelbindungen in organischen Resten Gr der allgemeinen Formel III enthalten: 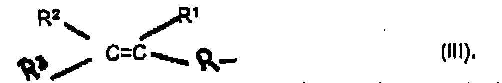 < die mindestens eine mit aktinischer Strahlung aktivierbare Kohlenstoff-Kohlenstoff-Doppelbindung enthält>

In der allgemeinen Formel III haben die Variablen die folgende Bedeutung:
- R: Einfachbindung zu einem Atom der vorstehend beschriebenen verküpfenden funktionellen Gruppe Z, insbesondere Kohlenstoff. Kohlenstoff-Einfachbindung zum Kohlenstoffatom einer Carbonyloxygruppe und zwelbindiger organischer Rest, vorzugsweise Kohlenstoff-Kohlenstoff-Einfachbindung; und
- R¹, R² und R³: Wasserstoffatom und organischer Rest;
wobei mindestens zwei der Reste R, R¹, R² und R³ cyclisch miteinander verknüpft sein können.

Beispiele geeigneter zweibindiger organischer Reste R enthalten Alkylen-, Cycloalkylen- und/oder Arylengruppen oder sie bestehen aus diesen. Gut geelgnete Alkylengruppen enthalten ein Kohlenstoffatom oder 2 bis 6 Kohlenstoffatome. Gut geeignete Cycloalkylengruppen enthalten 4 bis 10, Insbesondere 6, Kohlenstotfatome, Gut geeignete Arylengruppen enthalten 6 bis 10, insbesondere 6, Kohlenstoffatome.

Beispiele geeigneter organischer Reste R¹, R² und R³ enthalten Alkyl-, Cycloalkyl- und/oder Arylgruppen oder sie bestehen aus diesen. Gut geeignete Alkylgruppen enthalten ein Kohlenstoffatom oder 2 bis 6 Kohlenstoffatome. Gut geelgnete Cycloalkylgruppen enthalten 4 bis 10, insbesondere 6, Kohlenstoffatome, Gut geeignete Arylgruppen enthalten 6 bis 10, insbesondere 6, Kohlenstoffatome.

Die organischen Reste R, R¹, R² und R³ können substituiert oder unsubstitulert sein. Die Substituenten dürfen jedoch nicht die Durchführung des erfindungsgemäßen Verfahrens stören und/oder die Aktivierung der Gruppen mit aktinischer Strahlung inhibleren. Vorzugsweise sind die organischen Reste R, R¹, R² und R³ unsubstitulert.

Beispiele für besonders gut geeignete Reste Gr der allgemeinen Formel III sind Vinyl-, 1-Methylvinyl-, 1-Ethylvinyl-, Propen-1-yl, Styryl-, Cyclohexenyl-, Endomethylencyclohexyl-, Norbornenyl- und Dlcyclopentadienylgruppen, Insbesondere Vinylgruppen.

Demnach handelt es sich bei den besonders bevorzugten Resten

-Z-Gr (IV)

um (Meth)Acrylat-, Ethacrylat-, Crotonat-, Cinnamat-, Cyclohexencarboxylat-, Endomethylencyclohexancarboxylat-, Norbornencarboxylat- und Dicyclopentadiencarboxylatgruppen, bevorzugt (Meth)Acrylatgruppen, insbesondere Acrylatgruppen.

Beispiele für besonders vorteilhafte Verbindungen A1 sind Phenylglycidylethermonoacrylate, wie sie beispielsweise von der Firma Cray Valley unter der Bezeichnung Aromatic Epoxy Acrylate CN 131 B vertrieben werden.

Beispiele für besonders vorteilhafte Verbindungen A2 sind Laurylglycidylethermonoacrylate, wie sie beispielsweise von der Firma Cray Valley unter der Bezeichnung Aliphatic Epoxy Acrylate Monofunctional CN152 vertrieben werden, oder das C₁₂-C₁₄-Glycidylethermonoacrylat, das von der Firma Huntsman Vantico Europe unter der Bezeichnung LMB 6365 vertrieben wird.

Der Gehalt des erfindungsgemäßen Beschichtungsstoffs an den Verbindungen (A) kann breit variieren und richtet sich nach den Erfordernissen des Einzelfalls.

Vorzugsweise liegt der Gehalt an (A 1), jeweils bezogen auf den erfindungsgemäßen Beschichtungsstoff, bei 5 bis 30, bevorzugt 8 bis 25 und insbesondere 10 bis 20 Gew.-%. Vorzugsweise liegt der Gehalt an den Verbindungen (A2), jeweils bezogen auf den erfindungsgemäßen Beschichtungsstoff, bei 5 bis 30, bevorzugt 8 bis 25 und insbesondere 10 bis 20 Gew.-%. Vorzugsweise liegt dabei das Gewichtsverhältnis von (A1) : (A2) bei 4 : 1 bis 1 : 4, bevorzugt bei 3 : 1 bis 1 : 3, besonders bevorzugt bei 2 : 1 bis 1 : 2 und insbesondere 1,2 : 1 bis 1 : 1,2.

Der erfindungsgemäße Beschichtungsstoff enthält mindestens ein, insbesondere ein, mit aktinischer Strahlung aktivierbares Oligomer und/oder Polymer (B).

Im Rahmen der vorliegenden Erfindung wird unter einem Oligomer eine Verbindung verstanden, die aus 2 bis 12 monomeren Struktureinheiten, die gleich oder verschieden voneinander sein können, aufgebaut ist. Unter einem Polymer wird eine Verbindung verstanden, die aus mehr als 8, insbesondere mehr als 12, monomeren Struktureinheiten, die gleich oder verschieden voneinander sein können, aufgebaut ist. Ob eine Verbindung, die aus 8 bis 12 monomeren Struktureinheiten aufgebaut ist, im Einzelfall vom Fachmann als Oligomer oder Polymer angesehen wird, richtet sich insbesondere nach dem Molekulargewicht der betreffenden Verbindung.

Die Oligomeren und Polymeren (B) werden aus der Gruppe, bestehend aus Oligo- und Polyurethanen und Oligo- und Polyestern, die im statistischen Mittel mindestens zwei, vorzugsweise zwei oder drei, insbesondere zwei, mit aktinischer Strahlung aktivierbare Gruppen enthalten, ausgewählt. Beispiele geeigneter mit aktinischer Strahlung aktivierbarer Gruppen sind die vorstehend beschriebenen Reste der allgemeinen Formel (IV), bevorzugt (Meth)Acrylatgruppen, insbesondere Acrylatgruppen.

Vorzugsweise enthalten die Oligomeren und Polymeren (B) terminale (Meth)Acrylatgruppen, insbesondere terminale Acrylatgruppen.

Bevorzugt weisen die Oligomeren und Polymeren (B) mit terminalen Acrylatgruppen lineare Oligomer- oder Polymerhauptketten auf.

Vorzugsweise enthalten die Oligomer- oder Polymerhauptketten in der Hauptsache aliphatische oder cycloaliphatische Struktureinheiten.

Die Oligomeren und Polymeren (B) sind übliche und bekannte, im Handel erhältliche Verbindungen, die aus den üblichen und bekannten Ausgangsverbindungen für die Herstellung von Polyurethanen (Polyisocyanate und Polyole) oder Polyestern (Polycarbonsäuren und/oder Polycarbonsäurederivate und Polyole) nach den üblichen und bekannten Verfahren herstellbar sind.

Beispiele besonders gut geeigneter Polyester (B) sind die folgenden Handelsprodukte:
- Ebecryl® 80 und RD09/409 der Firma UCB;
- Photomer® 5029 und 5432 der Firma Cognis;
- Laromer® P55 der Firma BASF Aktiengesellschaft oder
- Craynor® 704 der Firma Sartomer Europe.

Insbesondere wird Craynor® 704 verwendet.

Beispiele besonders gut geeigneter Polyurethane (B) sind die folgenden Handelsprodukte:
- Roskydal® 2513, XP2571, 2258, WDJ 4084 oder WDJ 4083 der Firma Bayer Aktiengesellschaft;
- Actilane® 170, 280, 290 oder RCP4698 der Firma Akzo;
- Photomer® 6010, 6210, 6891, 6230, 6623 oder 6613 der Firma Cognis;
- CN 965, 962, 963, 966 oder 9001 der Firma Sartomer Europe oder
- CA-28/12-C oder CAQ 32/00 der Firma Uracriresins.

Insbesondere werden Gemische (B) aus
- Photomer® 6613 und Roskydal® 4084,
- Roskydal® 4083 und 4084 oder
- Photomer® 6613 und Actilane® RCP4698
vorzugsweise jeweils im Gewichtsverhältnis von 4 : 1 bis 1 : 4, bevorzugt bei 3 : 1 bis 1 : 3, besonders bevorzugt bei 2 : 1 bis 1 : 2 und insbesondere 1,2 : 1 bis 1 : 1,2 verwendet.

Der Gehalt des erfindungsgemäßen Beschichtungsstoffs an dem Bestandteil (B) kann sehr breit variieren und richtet sich nach den Erfordernissen des Einzelfalls, insbesondere nach der für die Handhabung und Applikation des erfindungsgemäßen Beschichtungsstoffs jeweils erforderlichen Viskosität. Vorzugsweise enthält der erfindungsgemäße Beschichtungsstoff, jeweils bezogen auf seine Gesamtmenge, 10 bis 50, bevorzugt 15 bis 40 und insbesondere 20 bis 30 Gew.-% (B).

Der erfindungsgemäße Beschichtungsstoff enthält außerdem mindestens einen Bestandteil (C), ausgewählt aus der Gruppe, bestehend aus farb- und/oder effektgebenden Pigmenten, insbesondere aus der Gruppe, bestehend aus organischen und anorganischen, farbigen und unbunten, optisch effektgebenden, elektrisch leitfähigen, magnetisch abschirmenden und fluoreszierenden Pigmenten.

Beispiele geeigneter Effektpigmente (C), die auch farbgebend sein können, sind Metallplättchenpigmente, wie handelsübliche Aluminiumbronzen, gemäß DE 36 36 183 A1 chromatierte Aluminiumbronzen, und handelsübliche Edelstahlbronzen, sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, Stuttgart, New York, 1998, Seite 176, »Effektpigmente« Seiten 380 und 381 »Metalloxid-Glimmer-Pigmente« bis »Metallpigmente«, und Seite 438, »Perlglanzpigmente«, »Perlmuttpigmente« und die Patentanmeldungen und Patente DE 36 36 156 A1, DE 37 18 446 A1, DE 37 19 804 A1, DE 39 30 601 A1, EP 0 068 311 A1, EP 0 264 843 A1, EP 0 265 820 A1, EP 0 283 852 A1, EP 0 293 746 A1, EP 0 417 567 A1, US 4,828,826 A oder US 5,244,649 A verwiesen.

Beispiele für geeignete anorganische farbgebende Pigmente sind Weißpigmente wie Titandioxidm, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente (C) sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »ThioindigoPigmente«, Seite 567 »Titandioxid-Pigmente«, Seiten 400 und 467, »Natürlich vorkommende Pigmente«, Seite 459 »Polycyclische Pigmente«, Seite 52, »AzomethinPigmente«, »Azopigmente«, und Seite 379, »Metallkomplex-Pigmente«, verwiesen.

Beispiele für fluoreszierende und phosphoreszierende Pigmente (C) (Tagesleuchtpigmente) sind Bis(azomethin)-Pigmente.

Beispiele für geeignete elektrisch leitfähige Pigmente (C) sind Titandioxid/Zinnoxid-Pigmente.

Beispiele für magnetisch abschirmende Pigmente sind Pigmente (C) auf der Basis von Eisenoxiden oder Chromdioxid.

Beispiele geeigneter korrosionshemmender Pigmente (C) sind Bleisilikate, Zinkphosphate oder Zinkborate.

Der Gehalt des erfindungsgemäßen Beschichtungsstoffs an Pigment (C) kann sehr breit variieren und richtet sich insbesondere nach den Farbtönen und/oder Effekten, die die erfindungsgemäßen Beschichtungen aufweisen sollen. Vorzugsweise werden die Pigmente (C) in den üblichen und bekannten Mengen verwendet.

Der erfindungsgemäße Beschichtungsstoff enthält des Weiteren mindestens ein, insbesondere ein, Wachs (D). Im Grunde kommen alle üblichen und bekannten Wachse in Betracht, wie sie beispielsweise in Römpp Lexikon Lacke und Druckfarben, Georg Thieme Verlag, Stuttgart, New York, 1998, »Wachse«, beschrieben werden. Vorzugsweise werden die Wachse (D) aus den synthetischen Wachsen, insbesondere aus der Gruppe, bestehend aus mikronisierten Polyolefinwachsen und fluorierten Polyolefinwachsen, insbesondere PTFE-Wachsen, ausgewählt. Wachse dieser Art sind üblich und bekannt und im Handel erhältlich. Beispiele geeigneter mikronisierter Wachse (D) sind die folgenden Handelsprodukte:
- Synfluo® 180 XF oder Polyfluo® 400XF, MP611XF oder MP21XF oder Carnaubawachs Mikroclear® 116 der Firma Micropowder;
- Zonyl® TE5119 der Firma Du Pont De Nemours and Company;
- Ceraflour® 980, 996 oder 998 der Firma Altana Chemie;
- Nanoflon® P 51-A der Firma Shamrock®;
- Pinnnacle® 9001 der Firma Lubrizol und
- UV-härtbares Wachs TP5071 der Firma Clariant.

Vorzugsweise werden Polyfluo® 400XF oder Carnaubawachs Mikroclear® 116 verwendet.

Vorzugsweise enthält der erfindungsgemäße Beschichtungsstoff, jeweils bezogen auf seine Gesamtmenge 0,1 bis 3 Gew.-%, bevorzugt 0,5 bis 2,5 Gew.-% und insbesondere 1 bis 2 Gew.-% an Wachs (D).

Des Weiteren enthält der erfindungsgemäße Beschichtungsstoff mindestens ein Mattierungsmittel (E). Beispiele geeigneter Mattierungsmittel sind aus dem Lehrbuch von Johan Bieleman, »Lackadditive«, Wiley-VCH, Weinheim, New York, 1998, »5.2 Mattierung«, Seiten 152 bis 169, bekannt. Vorzugsweise werden amorphe Kieselsäuren verwendet, die beispielsweise unter der Marke Silcron® von der Firma SCM vertrieben werden.

Der Gehalt des erfindungsgemäßen Beschichtungsstoffs an den Mattierungsmitteln (E) kann breit variieren und richtet sich nach dem Grad der Mattierung, den die erfindungsgemäßen Beschichtungen aufweisen sollen. Es ist indes ein ganz besonderer Vorteil des erfindungsgemäßen Beschichtungsstoffs, dass bereits mit vergleichsweise geringen Mengen an Mattierungsmitteln (E) ein guter Mattierungseffekt erzielt wird. Vorzugsweise enthält der Beschichtungsstoff, jeweils bezogen auf seine Gesamtmenge, 1 bis 15 Gew.-%, bevorzugt 2 bis 12 Gew.-% und insbesondere 3 bis 10 Gew.-% (E).

Außerdem enthält der erfindungsgemäße Beschichtungsstoff mindestens ein, vorzugsweise ein, Polysiloxan-Additiv (F), enthaltend im statistischen Mittel mindestens eine, insbesondere mindestens zwei, der vorstehend beschriebenen, mit aktinischer Strahlung aktivierbare Gruppen. Vorzugsweise werden übliche und bekannte Polysiloxan-Additive (F) auf Dimethylpolysiloxanbasis verwendet. Beispiele geeigneter Polysiloxan-Additive sind die folgenden Handelsprodukte:
- Byk® 377, UV 3500 oder UV 3570 der Firma Altana Chemie;
- Coatosil® 3503 oder 3509 der Firma OSI Specialties;
- Tegorad® 2700, 2500 oder 2200 der Firma Tego Chemie oder
- PA 29, 30 oder 31, DC 18 oder BY16-152 der Firma Dow Corning.

Vorzugsweise wird DC 18 oder BY16-152 der Firma Dow Corning verwendet.

Der erfindungsgemäße Beschichtungsstoff enthält das Polysiloxan-Additiv (F) in den üblichen und bekannten, wirksamen Mengen. Vorzugsweise liegt der Gehalt, jeweils bezogen auf den erfindungsgemäßen Beschichtungsstoff, bei 0,1 bis 3 Gew.-%, bevorzugt 0,5 bis 2,5 Gew.-% und insbesondere 0,5 bis 2 Gew.-%.

Bevorzugt enthält der erfindungsgemäße Beschichtungsstoff mindestens einen Reaktivverdünner (G), enthaltend mindestens eine, insbesondere eine, der vorstehend beschriebenen, mit aktinischer Strahlung aktivierbare Gruppen. Unter Reaktivverdünner werden reaktive Verdünnungsmittel oder reaktive Lösemittel verstanden, wobei es sich um einen vereinfachten Begriff für die längere Bezeichnung nach DIN 55945: 1996-09 handelt, die Verdünnungsmittel beschreibt, die bei der Filmbildung durch chemische Reaktion Bestandteil des Bindemittels werden. Hierbei handelt es sich insbesondere um olefinisch ungesättigte Monomere mit mindestens einer, vorzugsweise einer, Doppelbindung. Ergänzend wird hierzu auf Römpp Lexikon Lacke und Druckfarben, Georg Thieme Verlag, Stuttgart, New York, 1998, Seite 491, »Reaktivverdünner« verwiesen.

Besonders bevorzugt werden als Reaktivverdünner (G) Isobornylacrylat oder N-2-Hydroxyethylimidazolmethacrylat oder Gemische hiervon, vorzugsweise im Gewichtsverhältnis von 2 : 1 bis 1 : 2, bevorzugt 1,5 : 1 bis 1 : 1,5 und insbesondere 1,3 : 1 bis 1 : 1 verwendet.

Vorzugsweise enthält der erfindungsgemäße Beschichtungsstoff den oder die Reaktivverdünner (G), jeweils bezogen auf den erfindungsgemäßen Beschichtungsstoff, in einer Menge von 0,5 bis 10 Gew.-%, bevorzugt 1 bis 8 Gew.-% und insbesondere 1,5 bis 7 Gew.-%.

Bevorzugt enthält der erfindungsgemäße Beschichtungsstoff mindestens einer sauren Ester (H) von Polyphosphorsäure und mindestens einer Verbindung (h1), enthaltend mindestens eine Hydroxylgruppe und mindestens eine mit aktinischer Strahlung aktivierbare Gruppe, wie sie beispielsweise in der deutschen Patentanmeldung DE 102 56 265 A1,Seite 7, Absätze [0057] bis [0062], i. V. m. Seite 6, Absätze [0044] und [0045], beschrieben werden. Der Gehalt der Polyphosphorsäure an Diphosphorpentoxid kann breit variieren; vorzugsweise liegt er bei 60 bis 95, bevorzugt 70 bis 95 und insbesondere 70 bis 90 Gew.-%. Bevorzugt wird der sauren Ester (H) in einer Menge von, jeweils bezogen auf den erfindungsgemäßen Beschichtungsstoff, 0,1 bis 5 Gew.-%, besonders bevorzugt 0,5 bis 4 Gew.-% und insbesondere 1 bis 3 Gew.-% eingesetzt.

Der erfindungsgemäße Beschichtungsstoff kann mindestens einen üblichen und bekannten Zusatzstoff (J) in wirksamen Mengen enthalten. Beispiele geeigneter Zusatzstoffe (J) sind aus dem Lehrbuch von Johan Bieleman, »Lackadditive«, Wiley-VCH, Weinheim, New York, 1998, bekannt. Vorzugsweise werden die Zusatzstoffe (J) aus der Gruppe, bestehend aus Wasser; Polyphosphorsäure; Phosphonsäuren mit mindestens einer mit aktinischer Strahlung aktivierbaren Gruppe; sauren Estern von Monophosphorsäure und mindestens einer Verbindung, enthaltend mindestens eine Hydroxylgruppe und mindestens eine mit aktinischer Strahlung aktivierbare Gruppe (h1); Trockenstoffen; transparenten und opaken, organischen und anorganischen Füllstoffen; Nanopartikeln; thermisch oder physikalisch härtbaren, oligomeren und polymeren Bindemitteln; UV-Absorbern; Lichtschutzmitteln; Radikalfängern; Photoinitiatoren; Entlüftungsmitteln; Slipadditiven; Polymerisationsinhibitoren; Entschäumern; Emulgatoren und Netzmitteln; Haftvermittlern; Verlaufmitteln; Filmbildehilfsmitteln; rheologiesteuernden Additiven und Flammschutzmitteln; ausgewählt.

Die Herstellung des erfindungsgemäßen Beschichtungsstoffes erfolgt vorzugsweise mit Hilfe des erfindungsgemäßen Verfahrens durch das Vermischen der vorstehend beschriebenen Bestandteile (A) bis (F) sowie gegebenenfalls (G) bis (J) bevorzugt in geeigneten Mischaggregaten, wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer. Vorzugsweise wird hierbei unter Ausschluss von Licht einer Wellenlänge λ < 550 nm oder unter völligem Ausschluss von Licht gearbeitet, um eine vorzeitige Vernetzung der Bestandteile, die mit aktinischer Strahlung aktivierbare Gruppen enthalten, zu verhindern.

Bevorzugt wird der erfindungsgemäße Beschichtungsstoff hergestellt, indem man
(1) eine Mischung, enthaltend die Bestandteile (A), (B) und (F) sowie gegebenenfalls die Bestandteile (G) und/oder (H) und/oder einen geringen Anteil des Bestandteils (D), herstellt,
(2) den Bestandteil (C) und den Bestandteil (D) oder den überwiegenden Anteil des Bestandteils (D) in der Mischung (1) dispergiert und
(3) den Bestandteil (E) in der Mischung (2) dispergiert.

Die erfindungsgemäßen Beschichtungsstoffe sind hervorragend für die Herstellung von Beschichtungen aller Art geeignet. Insbesondere sind sie als Coil-Coating-Lacke geeignet. Außerdem eignen sie sich hervorragend für die Herstellung von Beschichtungen auf allen Gebrauchsmetallen, insbesondere auf blankem Stahl, galvanisiertem, elektroverzinktem und phosphatiertem Stahl, Zink und Aluminium, auf Beschichtungen, insbesondere Primerlackierungen, und auf SMC (Sheet Moulded Compounds) und BMC (Bulk Moulded Compounds). Die erfindungsgemäßen Beschichtungen sind dabei hervorragend als Klarlackierungen, Decklackierungen, temporäre oder permanente Schutzschichten, Primerlackierungen, Versiegelungen und Antifingerabdruck-Lackierungen, insbesondere aber als Decklackierungen oder Topcoats, geeignet.

Methodisch weist die Applikation des erfindungsgemäßen Beschichtungsstoffs keine Besonderheiten auf, sondern kann durch alle üblichen Applikationsmethoden, wie z.B. Spritzen, Rakeln, Streichen, Gießen, Tauchen, Träufeln oder Walzen erfolgen. Generell empfiehlt es sich, unter Ausschluss von aktinischer Strahlung zu arbeiten, um eine vorzeitige Vernetzung der erfindungsgemäßen Beschichtungsstoffe zu vermeiden. Nach der Applikation kann das in dem erfindungsgemäßen Beschichtungsstoff gegebenenfalls enthaltene Wasser in einfacher Weise verdampft werden, was auch als flash-off bezeichnet wird. Vorzugsweise geschieht dies durch die kurzzeitige induktive Aufheizung der Metallsubstrate.

Für die Härtung der applizierten erfindungsgemäßen Beschichtungsstoffe mit aktinischer Strahlung kommen insbesondere Elektronenstrahlquellen in Betracht, wie sie beispielsweise in A. Goldschmidt und H.-J. Streitberger, BASF-Handbuch Lackiertechnik, Vincentz Verlag, Hannover, 2002, Seiten 638 bis 641, oder in Römpp Lexikon Lacke und Druckfarben, Georg Thieme Verlag, Stuttgart New York, 1998, »Elektronenstrahler«, »Elektronenstrahlhärtung« und »Elektronenstrahlung«, beschrieben werden.

Vorzugsweise wird bei der Bestrahlung eine Strahlendosis von 10 bis 200, bevorzugt 20 bis 100 und insbesondere 30 bis 80 KGray eingesetzt. Bevorzugt wird die Bestrahlung unter Inertgas, insbesondere unter Stickstoff oder Edelgas, durchgeführt.

Dabei kann die Strahlenintensität breit variieren. Sie richtet sich insbesondere nach der Strahlendosis einerseits und der Bestrahlungsdauer andererseits. Die Bestrahlungsdauer richtet sich bei einer vorgegebenen Strahlendosis nach der Band- oder Vorschubgeschwindigkeit der Substrate in der Bestrahlungsanlage und umgekehrt.

Es ist ein besonderer Vorteil des erfindungsgemäßen Beschichtungsstoffs, dass er auch auf eine nur partiell gehärtete, mit aktinischer Strahlung härtbare Primerschicht appliziert werden kann, wonach man alle applizierten Schichten gemeinsam mit aktinischer Strahlung härtet. Hierdurch werden die Prozesszeiten weiter verkürzt, und die Zwischenschichthaftung wird weiter verbessert. Insgesamt ist es aufgrund der Verwendung des erfindungsgemäßen Beschichtungsstoffs nicht mehr notwendig, beim Coil-Coating-Verfahren die Metallfolien auf PMT (Peak Metal Temperature) von 240 °C und mehr zu erhitzen. Es erübrigt sich auch das Absaugen und Entsorgen flüchtiger organischer Verbindungen, sodass der apparative, sicherheitstechnische und energetische Aufwand signifikant reduziert werden kann.

Die resultierenden erfindungsgemäßen Beschichtungen sind hochflexibel, sehr hart, ohne Beschädigung sehr stark verformbar, chemikalienbeständig, witterungsbeständig, schwitzwasser- und salzwasserbeständig sowie von hoher Haftung zu den Substraten und anderen Beschichtungen. Bei alledem vermitteln sie noch einen hervorragenden optischen Eindruck.

### Beispiele

### Beispiel 1

Die Herstellung des Beschichtungsstoffs 1

Für die Herstellung des Beschichtungsstoffs 1 wurde zunächst eine Mischung (1) aus 19 Gewichtsteilen Phenylglycidylethermonoacrylat (CN 131 B der Firma Cray Valley), 19 Gewichtsteilen Laurylglycidylethermonoacrylat (CN 152 der Firma Cray Valley), 26 Gewichtsteilen eines bifunktionellen Polyesteracrylats (Craynor® 704 der Firma Sartomer Europe), 2 Gewichtsteilen eines Polyphosphorsäureesters von 4-Hydroxybutylacrylat (hergestellt durch die Umsetzung von 80 Gewichtsteilen 4-Hydroxybutylacrylat und 20 Gewichtsteilen Polyphosphorsäure eines Gehalts an Diphosphorpentoxid von 84 Gew.-%; Überschuss an 4-Hydroxybutylacrylat: 20 Gew.-%), 2 Gewichtsteilen einer Mischung aus Isobornylacrylat und N-2-hydroxyethylimidazolmethacrylat mit einem Gewichtsverhältnis von 1,2 : 1, 0,05 Gewichtsteilen eines Entlüftu ngsmittels (Versaflow® der Firma Shamrock) und 1,5 Gewichtsteilen eines mit aktinischer Strahlung härtbaren Polysiloxan-Additivs (DC 18 der Firma Dow Corning) hergestellt und in einem Ultraturrax während 30 Minuten bei einer Drehzahl von 1.800 homogenisiert.

Die resultierende Mischung (1) wurde im Ultraturrax mit 23,85 Gewichtsteilen Titandioxid-Pigment (Tioxide® TR 81) und 1,1 Gewichtsteilen eines mikronisierten, PTFE-modifizierten Polyethylenwachses (Polyfluo® 400XF der Firma Micropowder) versetzt und anschließend homogenisiert, wodurch die Mischung (2) resultierte.

Der Mischung (2) wurde im Ultraturrax mit 7,5 Gewichtsteilen eines Mattierungsmittels (Silcron® G602, amorphes Siliziumdioxid der Firma SMC) versetzt und homogenisiert, wodurch die Mischung (3) bzw. der Beschichtungsstoff 1 resultierte.

Der Beschichtungsstoff 1 war unter Ausschluss von aktinischer Strahlung mehrere Monate lang völlig lagerstabil. Er wies kein thixotropes Verhalten auf. Er war hervorragend für die Herstellung von Decklackierungen oder Topcoats mit Hilfe des Coil-Coating-Verfahrens geeignet.

### Beispiel 2

Die Herstellung des Beschichtungsstoffs 2

Für die Herstellung des Beschichtungsstoffs 2 wurde zunächst eine Mischung (1) aus 17,4 Gewichtsteilen Phenylglycidylethermonoacrylat (CN 131 B der Firma Cray Valley), 17,4 Gewichtsteilen Laurylglycidylethermonoacrylat (CN 152 der Firma Cray Valley), 23,2 Gewichtsteilen eines bifunktionellen Polyesteracrylats (Craynor® 704 der Firma Sartomer Europe), 2,5 Gewichtsteilen eines Polyphosphorsäureesters von 4-Hydroxybutylacrylat (hergestellt durch die Umsetzung von 80 Gewichtsteilen 4-Hydroxybutylacrylat und 20 Gewichtsteilen Polyphosphorsäure eines Gehalts an Diphosphorpentoxid von 84 Gew.-%; Überschuss an 4-Hydroxybutylacrylat: 20 Gew.-%), 5,5 Gewichtsteilen einer Mischung aus Isobornylacrylat und N-2-hydroxyethylimidazolmethacrylat mit einem Gewichtsverhältnis von 1,2 : 1 und 1,5 Gewichtsteilen eines mit aktinischer Strahlung härtbaren Polysiloxan-Additivs (BY16-562 der Firma Dow Corning) hergestellt und in einem Ultraturrax während 30 Minuten bei einer Drehzahl von 1.800 homogenisiert.

Die resultierende Mischung (1) wurde im Ultraturrax mit 24 Gewichtsteilen Titandioxid-Pigment (Tioxide® TR 81) und 1,1 Gewichtsteilen eines mikronisierten, PTFE-modifizierten Polyethylenwachses (Polyfluo® 400XF der Firma Micropowder) versetzt und anschließend homogenisiert, wodurch die Mischung (2) resultierte.

Der Mischung (2) wurde im Ultraturrax mit 7,5 Gewichtsteilen eines Mattierungsmittels (Silcron® G602, amorphes Siliziumdioxid der Firma SMC) versetzt und homogenisiert, wodurch die Mischung (3) bzw. der Beschichtungsstoff 2 resultierte.

Der Beschichtungsstoff 2 war unter Ausschluss von aktinischer Strahlung mehrere Monate lang völlig lagerstabil. Er wies kein thixotropes Verhalten auf. Er war hervorragend für die Herstellung von Decklackierungen oder Topcoats mit Hilfe des Coil-Coating-Verfahrens geeignet.

### Beispiele 3 bis 5

Die Herstellung der Beschichtungsstoffe 3 bis 5

Beispiel 1 wurde wiederholt, nur dass an Stelle eines bifunktionellen Polyesteracrylats (Craynor® 704 der Firma Sartomer Europe)
- bei Beispiel 3 eine Mischung der Polyurethanacrylate Photomer® 6613 der Firma Cognis und Roskydal® 4084 der Firma Bayer Aktiengesellschaft,
- bei Beispiel 4 eine Mischung der Polyurethanacrylate Roskydal® 4083 und 4084 der Firma Bayer Aktiengesellschaft und
- bei Beispiel 5 eine Mischung der Polyurethanacrylate Photomer® 6613 der Firma Cognis und RCP4698 der Firma Akzo,
jeweils im Gewichtsverhältnis 1 : 1 verwendet wurde.

Die Beschichtungsstoffe 3 bis 5 waren unter Ausschluss von aktinischer Strahlung mehrere Monate lang völlig lagerstabil. Sie wiesen kein thixotropes Verhalten auf. Sie waren hervorragend für die Herstellung von Decklackierungen oder Topcoats mit Hilfe des Coil-Coating-Verfahrens geeignet.

### Beispiele 6 bis 8

Die Herstellung der Beschichtungsstoffe 6 bis 8

Beispiel 2 wurde wiederholt, nur dass an Stelle eines bifunktionellen Polyesteracrylats (Craynor® 704 der Firma Sartomer Europe)
- bei Beispiel 6 eine Mischung der Polyurethanacrylate Photomer® 6613 der Firma Cognis und Roskydal® 4084 der Firma Bayer Aktiengesellschaft,
- bei Beispiel 7 eine Mischung der Polyurethanacrylate Roskydal® 4083 und 4084 der Firma Bayer Aktiengesellschaft und
- bei Beispiel 8 eine Mischung der Polyurethanacrylate Photomer® 6613 der Firma Cognis und RCP4698 der Firma Akzo,
jeweils im Gewichtsverhältnis 1 : 1 verwendet wurde.

Die Beschichtungsstoffe 6 bis 8 waren unter Ausschluss von aktinischer Strahlung mehrere Monate lang völlig lagerstabil. Sie wiesen kein thixotropes Verhalten auf. Sie waren hervorragend für die Herstellung von Decklackierungen oder Topcoats mit Hilfe des Coil-Coating-Verfahrens geeignet.

### Beispiele 9 und 10

Die Herstellung der farbgebenden Lackierungen 1 und 2, umfassend eine Primerlackierung und eine Decklackierung 1 und 2, mit Hilfe der Beschichtungsstoffe 1 und 2 der Beispiel 1 und 2

Bei Beispiel 9 wurde der Beschichtungsstoff 1 des Beispiels 1 verwendet.

Bei Beispiel 10 wurde der Beschichtungsstoff 2 des Beispiels 2 verwendet.

Als Substrate wurden nicht vorbehandelten Stahlbleche aus HDG (hot dipped galvanized)-Stahl Z280 der Firma Chemetall verwendet.

Für die Herstellung der Primerlackierung wurde zunächst ein Primer aus 33,25 Gewichtsteilen Phenylglycidylethermonoacrylat (CN 131 B der Firma Cray Valley), 22,8 Gewichtsteilen Laurylglycidylethermonoacrylat (CN 152 der Firma Cray Valley), 1,12 Gewichtsteilen Polypropylenglycolmonoacrylat (PAM 300 der Firma Rhodia), 1,12 Gewichtsteilen eines Epoxidharzes (Epikote® 862), 5,82 Gewichtsteilen Wasser, 2,91 Gewichtsteilen eines Polyphosphorsäureesters von 4-Hydroxybutylacrylat (hergestellt durch die Umsetzung von 80 Gewichtsteilen 4-Hydroxybutylacrylat und 20 Gewichtsteilen Polyphosphorsäure eines Gehalts an Diphosphorpentoxid von 84 Gew.-%; Überschuss an 4-Hydroxybutylacrylat: 20 Gew.-%), 1,68 Gewichtsteilen niedrigviskoses Polyvinylbutyral (Pioloform® BN 18 der Firma Wacker), 18,5 Gewichtsteilen Aluminiumpolyphosphat-Pigment (Targon® WA 2886 der Firma BK Giulini), 6 Gewichtsteilen Nanopartikel auf der Basis von Siliziumdioxid (Nyasil® 6200 der Firma Nyacol Nano Technologies) und 9 Gewichtsteilen Titandioxid-Pigment (Tioxide® TR 81) hergestellt. Die Mischung wurde in einem Ultraturrax während 20 Minuten bei einer Drehzahl von 1.800/min homogenisiert.

Der Primer wurde in einer Schichtdicke von 6 bis 7 µm auf die Substrate aufgetragen. Das darin enthaltene Wasser wurde während einer Minute bei 125°C verdampft. Die resultierende Primerschicht wurde mit Elektronenstrahlung (50 KGray) unter Stickstoff gehärtet, wodurch die Primerlackierung resultierte.

Die Beschichtungsstoffe 1 und 2 der Beispiele 1 und 2 wurden unter Ausschluss von aktinischer Strahlung bei 40°C auf die Primerlackierungen mit einer mittleren Schichtdicke von 21 µm appliziert. Die resultierenden Decklackschichten 1 und 2 wurden während 30 Sekunden im Umluftofen bei 120°C erhitzt, wodurch eine Oberflächentemperatur der Decklackschichten 1 und 2 von 50°C resultierte. Anschließend wurden die Decklackschichten 1 und 2 mit Elektronenstrahlung (65 KGray) unter Stickstoff gehärtet, wodurch die Decklackierungen 1 und 2 resultierten.

Die Decklackierungen 1 und 2 erfüllten in vollem Umfang die ECCA-Norm der Klasse 6 (T-Bend-Test: 1,5; Tape-Test: 0). Sie wiesen die Bleistifthärte HB auf. Ihr Glanz (60°) lag bei 28 bis 32% (Decklackierung 1) bzw. 34 bis 36% (Decklackierung 2). Im Salzsprühtest zeigten sie selbst nach 504 Stunden keine Korrosion am Ritz. Sie waren lösemittelbeständig (Doppelhübe mit einem getränkten Wattebausch: Alkohol 100, Xylol 80, Ethylacetat 60) und witterungsbeständig.

### Beispiele 11 bis 16

Die Herstellung der farbgebenden Lackierungen 3 bis 8, umfassend eine Primerlackierung und jeweils eine der Decklackierungen 3 bis 8, mit Hilfe der Beschichtungsstoffe 3 bis 8 der Beispiel 3 bis 8

Für die Beispiele 11 bis 13 wurde das Beispiel 9 wiederholt, nur dass an Stelle des Beschichtungsstoffs 1 des Beispiels 1
- bei Beispiel 11 der Beschichtungsstoff 3 des Beispiels 3,
- bei Beispiel 12 der Beschichtungsstoff 4 des Beispiels 4 und
- bei Beispiel 13 der Beschichtungsstoff 5 des Beispiels 5
verwendet wurde.

Für die Beispiele 14 bis 16 wurde das Beispiel 10 wiederholt, nur dass an Stelle des Beschichtungsstoff 2 des Beispiels 2
- bei Beispiel 14 der Beschichtungsstoff 6 des Beispiels 6,
- bei Beispiel 15 der Beschichtungsstoff 7 des Beispiels 7 und
- bei Beispiel 16 der Beschichtungsstoff 8 des Beispiels 8
verwendet wurde.

Die resultierenden farbgebenden Lackierungen 3 bis 8 der Beispiele 11 bis 16 wiesen dieselben vorteilhaften Eigenschaften auf wie die farbgebenden Lackierungen 1 und 2 der Beispiele 9 und 10.

## Patentansprüche

1. Mit aktinischer Strahlung härtbarer, von organischen Lösemitteln Im Wesentlichen oder völlig freier, flüssiger Beschichtungsstoff, enthaltend
(A) mindestens zwei Verbindungen der allgemeinen Formel I:
X-O-Y(-OH)-Z-Gr (I),
worin die Variabien die folgende Bedeutung haben:
X aromatischer Rest mit 6 bis 14 Kohlenstoffatomen, heterocyclischer aromatischer Rest mit 5 bis 20 Ringatomen oder Alkylrest mit 6 bis 30 Kohlenstoffatomen,
Y dreibindiger organischer Rest,
Z verküpfende funktionelle Gruppe und
Gr organischer Rest mit mindestens einer mit aktinischer Strahlung aktivierbare Gruppe, die mindestens eine mit aktinischer Strahlung aktivierbare Kohlenstoff-Kohlenstoff- Doppelbindung enthält;
Mit der Maßgabe, dass mindestens eine der mindestens zwei Verbindungen (A) einen aromatischen oder heterocyclischen aromatischen Rest X (=Verbindung A1) und mindestens eine der mindestens zwei Verbindungen (A) einen Alkylrest X (=Verbindung A2) aufweisen;
(B) mindestens ein mit aktinischer Strahlung aktivierbares Oligomer und/oder Polymer, ausgewählt aus der Gruppe, bestehend aus Oligo- und Polyurethanen und Ollgo- und Polyestern, die im statistischen Mittel mindestens zwei mit aktinischer Strahlung aktivierbare Gruppen enthalten;
(C) mindestens einen Bestandteil, ausgewählt aus der Gruppe, bestehend aus farb- und/oder effektgebenden Pigmenten;
(D) mindestens ein Wachs;
(E) mindestens ein Mattierungsmittel und
(F) mindestens ein Polyslloxan-Additiv, enthaltend im statistischen Mittel mindestens eine mit aktinischer Strahlung aktivierbare Gruppe.

2. Beschichtungsstoff nach Anspruch 1, **dadurch gekennzeichnet, dass** der Rest X von (A1) ein aromatischer Rest mit 6 bis 10 Kohlenstoffatomen ist.

3. Beschichtungsstoff nach Anspruch 1 oder 2, **dadurch gekennzeichnet, dass** der Rest X von (A2) ein geradkettiger Alkylrest mit 10 bis 20 Kohlenstoffatomen ist.

4. Beschichtungsstoff nach einem der Ansprüche 1 bis 3, **dadurch gekennzeichnet, dass** der dreibindige organische Rest ein aliphatischer Rest mit 3 bis 6 Kohlenstoffatomen ist.

5. Beschichtungsstoff nach einem der Ansprüche 1 bis 4, **dadurch gekennzeichnet, dass** die verküpfende funktionelle Gruppe Z eine Carbonsäureestergruppe ist, die mit den Resten Y und Gr gemäß der allgemeinen Formel II:
>Y-O-(O=)C-Gr (II),
verknüpft ist.

6. Beschichtungsstoff nach einem der Ansprüche 1 bis 5, **dadurch gekennzeichnet, dass** der organische Rest Gr eine mit aktinischer Strahlung aktivierbare Gruppe enthält oder hieraus besteht.

7. Beschichtungsstoff nach einem der Ansprüche 1 bis 6, **dadurch gekennzeichnet, dass** der Beschichtungsstoff, bezogen auf seine Gesamtmenge, 5 bis 30 Gew.-% (A1) enthält.

8. Beschichtungsstoff nach einem der Ansprüche 1 bis 7, **dadurch gekennzeichnet, dass** der Beschichtungsstoff, bezogen auf seine Gesamtmenge, 5 bis 30 Gew.-% (A2) enthält.

9. Beschichtungsstoff nach einem der Ansprüche 1 bis 8, **dadurch gekennzeichnet, dass** das mit aktinischer Strahlung aktivierbare Oligomer oder Polymer (B) zwei oder drei, insbesondere zwei, mit aktinischer Strahlung aktivierbare Gruppen enthält.

10. Beschichtungsstoff nach einem der Ansprüche 1 bis 9, **dadurch gekennzeichnet, dass** der Beschichtungsstoff, bezogen auf seine Gesamtmenge, 10 bis 50 Gew.-% (B) enthält.

11. Beschichtungsstoff nach einem der Ansprüche 1 bis 10, **dadurch gekennzeichnet, dass** das Pigment (C) aus der Gruppe, bestehend aus organischen und anorganischen, farbigen und unbunten, optisch effektgebenden, elektrisch leitfähigen, magnetisch abschirmenden und fluoreszierenden Pigmenten ausgewählt ist.

12. Beschichtungsstoff nach einem der Ansprüche 1 bis 11, **dadurch gekennzeichnet, dass** das Wachs (D) aus der Gruppe, bestehend aus mikronisierten Polyolefinwachsen und fluorierten Polyolefinwachsen, insbesondere PTFE-Wachsen, ausgewählt ist.

13. Beschichtungsstoff nach einem der Ansprüche 1 bis 12, **dadurch gekennzeichnet, dass** der Beschichtungsstoff, bezogen auf seine Gesamtmenge, 0,1 bis 3 Gew.-% (D) enthält.

14. Beschichtungsstoff nach einem der Ansprüche 1 bis 13, **dadurch gekennzeichnet, dass** das Mattierungsmittel (E) eine amorphe Kieselsäure ist.

15. Beschichtungsstoff nach einem der Ansprüche 1 bis 14, **dadurch gekennzeichnet, dass** der Beschichtungsstoff, bezogen auf seine Gesamtmenge, 1 bis 15 Gew.-% (E) enthält.

16. Beschichtungsstoff nach einem der Ansprüche 1 bis 15, **dadurch gekennzeichnet, dass** das Polysiloxan-Additiv (F) mindestens zwei mit aktinischer Strahlung aktivierbare Gruppen enthält.

17. Beschichtungsstoff nach einem der Ansprüche 1 bis 16, **dadurch gekennzeichnet, dass** der Beschichtungsstoff mindestens einen Reaktivverdünner (G), enthaltend mindestens eine, insbesondere eine, mit aktinischer Strahlung aktivierbare Gruppe, enthält.

18. Beschichtungsstoff nach einem der Ansprüche 1 bis 17, **dadurch gekennzeichnet, dass** der Beschichtungsstoff mindestens einen sauren Ester (H) von Polyphosphorsäure und mindestens einer Verbindung (h1), enthaltend mindestens eine Hydroxylgruppe und mindestens eine mit aktinischer Strahlung aktivierbare Gruppe, enthält.

19. Beschichtungsstoff nach einem der Ansprüche 1 bis 18, **dadurch gekennzeichnet, dass** die mit aktinischer Strahlung aktivierbaren Gruppen olefinisch ungesättigte Doppelbindungen sind.

20. Beschichtungsstoff nach einem der Ansprüche 1 bis 19, **dadurch gekennzeichnet, dass** die aktinische Strahlung Elektronenstrahlung ist.

21. Beschichtungsstoff nach einem der Ansprüche 1 bis 20, **dadurch gekennzeichnet, dass** der Beschichtungsstoff mindestens einen Zusatzstoff (J), ausgewählt aus der Gruppe, bestehend aus Wasser ; Polyphosphorsäure; Phosphonsäuren mit mindestens einer mit aktinischer Strahlung aktivierbaren Gruppe; sauren Estern von Monophosphorsäure und mindestens einer Verbindung, enthaltend mindestens eine Hydroxylgruppe und mindestens eine mit aktinischer Strahlung aktivierbare Gruppe (h1); Trockenstoffen; transparenten und opaken, organischen und anorganischen Füllstoffen; Nanopartikeln; thermisch oder physikalisch härtbaren, oligomeren und polymeren Bindemitteln; UV-Absorbern; Lichtschutzmitteln; Radikalfängern; Photoinitiatoren; Entlüftungsmitteln; Slipadditiven; Polymerisationsinhibitoren; Entschäumern; Emulgatoren und Netzmitteln; Haftvermittlern; Verlaufmitteln; Filmbildehilfsmitteln; rheologiesteuernden Additiven und Flammschutzmitteln enthält.

22. Verfahren zur Herstellung eines Beschichtungsstoffs gemäß einem der Ansprüche 1 bis 21 , **dadurch gekennzeichnet, dass** man die Bestandteile (A) bis (F) sowie gegebenenfalls (G) bis (J) des Beschichtungsstoffs miteinander vermischt und die resultierende Mischung homogenisiert.

23. Verfahren nach Anspruch 22, **dadurch gekennzeichnet, dass** man
(1) eine Mischung, enthaltend die Bestandteile (A), (B) und (F) sowie gegebenenfalls die Bestandteile (G) und/oder (H) und/oder einen geringen Anteil des Bestandteils (D), herstellt,
(2) den Bestandteil (C) und den Bestandteil (D) oder den überwiegenden Anteil des Bestandteils (D) in der Mischung (1) dispergiert und
(3) den Bestandteil (E) in der Mischung (2) dispergiert.

24. Verwendung des Beschichtungsstoffs gemäß einem der Ansprüche 1 bis 21 und des mit Hilfe des Verfahrens gemäß Anspruch 22 oder 23 hergestellten Beschichtungsstoffs für die Herstellung von Coil-Coatings.

25. Verwendung nach Anspruch 24 , **dadurch gekennzeichnet, dass** die Coil-Coatings Decklackierungen oder Topcoats sind.

## Claims

1. Liquid coating material curable with actinic radiation, substantially or entirely free from organic solvents, and comprising
(A) at least two compounds of the general formula I:
**X-O-Y(-OH)-Z-Gr** (I),
in which the variables have the following definitions:
X is an aromatic radical of 6 to 14 carbon atoms, heterocyclic aromatic radical of 5 to 20 ring atoms or alkyl radical of 6 to 30 carbon atoms,
Y is a trivalent organic radical,
Z is a linking functional group, and
Gr is an organic radical containing at least one group which can be activated with actinic radiation and which contains at least one carbon-carbon double bond which can be activated with actinic radiation;
with the proviso that at least one of the at least two compounds (A) contains an aromatic or heterocyclic aromatic radical X (= compound A1) and at least one of the at least two compounds (A) contains an alkyl radical X (= compound A2);
(B) at least one oligomer and/or polymer which can be activated with actinic radiation and is selected from the group consisting of oligo- and polyurethanes and oligo- and polyesters containing on average at least two groups which can be activated with actinic radiation;
(C) at least one constituent selected from the group consisting of color and/or effect pigments;
(D) at least one wax;
(E) at least one matting agent; and
(F) at least one polysiloxane additive containing on average at least one group which can be activated with actinic radiation.

2. Coating material according to Claim 1, **characterized in that** the radical X of (A1) is an aromatic radical of 6 to 10 carbon atoms.

3. Coating material according to Claim 1 or 2, **characterized in that** the radical X of (A2) is a straight-chain alkyl radical of 10 to 20 carbon atoms.

4. Coating material according to any one of Claims 1 to 3, **characterized in that** the trivalent organic radical is an aliphatic radical of 3 to 6 carbon atoms.

5. Coating material according to any one of Claims 1 to 4, **characterized in that** the linking functional group Z is a carboxylic ester group linked to the radicals Y and Gr in accordance with the general formula II;
**>Y-O-(O=)C-Gr** (II).

6. Coating material according to any one of Claims 1 to 5, **characterized in that** the organic radical Gr includes or consists of a group which can be activated with actinic radiation.

7. Coating material according to any one of Claims 1 to 6, **characterized in that** the coating material contains, based on its total amount, 5% to 30% by weight (A1).

8. Coating material according to any one of Claims 1 to 7, **characterized in that** the coating material contains, based on its total amount, 5% to 30% by weight (A2).

9. Coating material according to any one of Claims 1 to 8, **characterized in that** the oligomer or polymer (B) which can be activated with actinic radiation contains two or three, especially two, groups which can be activated with actinic radiation.

10. Coating material according to any one of Claims 1 to 9, **characterized in that** the coating material contains, based on its total amount, 10% to 50% by weight (B).

11. Coating material according to any one of Claims 1 to 10, **characterized in that** the pigment (C) is selected from the group consisting of organic and inorganic, colored and achromatic, optical effect, electrically conductive, magnetically shielding, and fluorescent pigments.

12. Coating material according to any one of Claims 1 to 11, **characterized in that** the wax (D) is selected from the group consisting of micronized polyolefin waxes and fluorinated polyolefin waxes, especially PTFE waxes.

13. Coating material according to any one of Claims 1 to 12, **characterized in that** the coating material contains, based on its total amount, 0.1% to 3% by weight (D).

14. Coating material according to any one of Claims 1 to 13, **characterized in that** the matting agent (E) is an amorphous silica.

15. Coating material according to any one of Claims 1 to 14, **characterized in that** the coating material contains, based on its total amount, 1% to 15% by weight (E).

16. Coating material according to any one of Claims 1 to 15, **characterized in that** the polysiloxane additive (F) contains at least two groups which can activated with actinic radiation.

17. Coating material according to any one of Claims 1 to 16, **characterized in that** the coating material comprises at least one reactive diluent (G) containing at least one, especially one, group which can be activated with actinic radiation.

18. Coating material according to any one of Claims 1 to 17, **characterized in that** the coating material comprises at least one acidic ester (H) of polyphosphoric acid and at least one compound (h1) containing at least one hydroxyl group and at least one group which can be activated with actinic radiation.

19. Coating material according to any one of Claims 1 to 18, **characterized in that** the groups which can be activated with actinic radiation are olefinically unsaturated double bonds.

20. Coating material according to any one of Claims 1 to 19, **characterized in that** the actinic radiation is electron beams.

21. Coating material according to any one of Claims 1 to 20, **characterized in that** the coating material comprises at least one additive (J) selected from the group consisting of water; polyphosphoric acid; phosphonic acids containing at least one group which can be activated with actinic radiation; acidic esters of monophosphoric acid and at least one compound containing at least one hydroxyl group and at least one group which can be activated with actinic radiation (h1); dryers; transparent and opaque, organic and inorganic fillers; nanoparticles; thermally or physically curable, oligomeric and polymeric binders; UV absorbers; light stabilizers; free-radical scavengers; photoinitiators; devolatilizers; slip additives; polymerization inhibitors; defoamers; emulsifiers; wetting agents; adhesion promoters; flow control agents; film-forming auxiliaries; rheology control additives; and flame retardants.

22. Process for preparing a coating material according to any one of Claims 1 to 21, **characterized in that** constituents (A) to (F) and also, where used, (G) to (J) of the coating material are mixed with one another and the resulting mixture is homogenized.

23. Process according to Claim 22, **characterized in that**
(1) a mixture containing constituents (A), (B) and (F) and also, where used, constituents (G) and/or (H) and/or a small fraction of constituent (D) is prepared,
(2) constituent (C) and constituent (D), or the major proportion of constituent (D), are dispersed in the mixture (1), and
(3) constituent (E) is dispersed in the mixture (2).

24. Use of the coating material according to any one of Claims 1 to 21 and of the coating material prepared by means of the process according to Claim 22 or 23 for producing coil coatings.

25. Use according to Claim 24, **characterized in that** the coil coatings are topcoats.

## Revendications

1. Matière de revêtement liquide durcissable par un rayonnement actinique, pratiquement ou totalement exempte de solvants organiques, contenant
(A) au moins deux composés de formule générale I :
X-O-Y(-OH)-Z-Gr (I),
dans laquelle les variables ont les significations suivantes :
X représente un radical aromatique ayant de 6 à 14 atomes de carbone, un radical aromatique hétérocyclique ayant de 5 à 20 atomes de carbone formant le cycle ou un radical alkyle ayant de 6 à 30 atomes de carbone,
Y représente un radical organique à trois liaisons,
Z représente un groupe fonctionnel de liaison et
Gr représente un radical organique comportant au moins un groupe activable par un rayonnement actinique, qui contient au moins une double liaison carbone-carbone activable par un rayonnement actinique ;
étant entendu qu'au moins l'un desdits au moins deux composés (A) comporte un radical X aromatique ou hétérocyclique (= composé A1) et au moins l'un desdits au moins deux composés (A) comporte un radical X alkyle (= composé A2) ;
(B) au moins un oligomère et/ou polymère activable par un rayonnement actinique, choisi dans le groupe constitué par des oligo- et polyuréthannes et des oligo- et polyesters, qui contiennent en moyenne statistique au moins deux groupes activables par un rayonnement actinique ;
(C) au moins un composant, choisi dans le groupe constitué par des pigments colorants et/ou à effet ;
(D) au moins une cire ;
(E) au moins un agent de matité et
(F) au moins un additif polysiloxane, contenant en moyenne statistique au moins un groupe activable par un rayonnement actinique.

2. Matière de revêtement selon la revendication 1, **caractérisée en ce que** le radical X de (A1) est un radical aromatique ayant de 6 à 10 atomes de carbone.

3. Matière de revêtement selon la revendication 1 ou 2, **caractérisée en ce que** le radical X de (A2) est un radical alkyle à chaîne droite ayant de 10 à 20 atomes de carbone.

4. Matière de revêtement selon l'une quelconque des revendications 1 à 3, **caractérisée en ce que** le radical organique à trois liaisons est un radical aliphatique ayant de 3 à 6 atomes de carbone.

5. Matière de revêtement selon l'une quelconque des revendications 1 à 4, **caractérisée en ce que** le groupe fonctionnel de liaison Z est un groupe ester d'acide carboxylique qui est lié aux radicaux Y et Gr selon la formule II :
>Y-O(O=)C-Gr (II).

6. Matière de revêtement selon l'une quelconque des revendications 1 à 5, **caractérisée en ce que** le radical organique Gr contient un groupe activable par un rayonnement actinique ou consiste en un tel groupe.

7. Matière de revêtement selon l'une quelconque des revendications 1 à 6, **caractérisée en ce que** la matière de revêtement contient, par rapport à sa quantité totale, de 5 à 30 % en poids de (Al).

8. Matière de revêtement selon l'une quelconque des revendications 1 à 7, **caractérisée en ce que** la matière de revêtement contient, par rapport à sa quantité totale, de 5 à 30 % en poids de (A2).

9. Matière de revêtement selon l'une quelconque des revendications 1 à 8, **caractérisée en ce que** l'oligomère ou polymère (B) activable par un rayonnement actinique contient deux ou trois, en particulier deux, groupes activables par un rayonnement actinique.

10. Matière de revêtement selon l'une quelconque des revendications 1 à 9, **caractérisée en ce que** la matière de revêtement contient, par rapport à sa quantité totale, de 10 à 50 % en poids de (B).

11. Matière de revêtement selon l'une quelconque des revendications 1 à 10, **caractérisée en ce que** le pigment (C) est choisi dans le groupe constitué par des pigments organiques ou inorganiques, colorés ou incolores, à effet optique, conducteurs de l'électricité, antimagnétiques et fluorescents.

12. Matière de revêtement selon l'une quelconque des revendications 1 à 11, **caractérisée en ce que** la cire (D) est choisie dans le groupe constitué par des cires de polyoléfines micronisées et des cires de polyoléfines fluorées, en particulier des cires de PTFE.

13. Matière de revêtement selon l'une quelconque des revendications 1 à 12, **caractérisée en ce que** la matière de revêtement contient, par rapport à sa quantité totale, de 0,1 à 3 % en poids de (D).

14. Matière de revêtement selon l'une quelconque des revendications 1 à 13, **caractérisée en ce que** l'agent de matité (E) est un acide silique amorphe.

15. Matière de revêtement selon l'une quelconque des revendications 1 à 14, **caractérisée en ce que** la matière de revêtement contient, par rapport à sa quantité totale, de 1 à 15 % en poids de (E).

16. Matière de revêtement selon l'une quelconque des revendications 1 à 15, **caractérisée en ce que** l'additif polysiloxane (F) contient au moins deux groupes activables par un rayonnement actinique.

17. Matière de revêtement selon l'une quelconque des revendications 1 à 16, **caractérisée en ce que** la matière de revêtement contient au moins un diluant réactif (G), contenant au moins un, en particulier un, groupe activable par un rayonnement actinique.

18. Matière de revêtement selon l'une quelconque des revendications 1 à 17, **caractérisée en ce que** la matière de revêtement contient au moins un ester acide (H) d'acide polyphosphorique et d'au moins un composé (h1), contenant au moins un groupe hydroxy et au moins un groupe activable par un rayonnement actinique.

19. Matière de revêtement selon l'une quelconque des revendications 1 à 18, **caractérisée en ce que** les groupes activables par un rayonnement actinique sont des doubles liaisons à insaturation oléfinique.

20. Matière de revêtement selon l'une quelconque des revendications 1 à 19, **caractérisée en ce que** le rayonnement actinique est un faisceau d'électrons.

21. Matière de revêtement selon l'une quelconque des revendications 1 à 20, **caractérisée en ce que** la matière de revêtement contient au moins un additif (J), choisi dans le groupe constitué par l'eau ; l'acide polyphosphorique; des acides phosphoniques comportant au moins un groupe activable par un rayonnement actinique ; des esters acides d'acide monophosphorique et d'au moins un composé (h1), contenant au moins un groupe hydroxy et au moins un groupe activable par un rayonnement actinique ; des siccatifs ; des charges organiques ou inorganiques, transparentes ou opaques ; des nanoparticules ; des liants oligomères ou polymères, durcissables physiquement ou thermiquement ; des absorbeurs UV ; des photoprotecteurs; des capteurs de radicaux ; des photoamorceurs; des agents de désaération; des lubrifiants ; des inhibiteurs de polymérisation ; des antimousses; des émulsifiants et des agents mouillants ; des promoteurs d'adhérence ; des agents d'étalement ; des adjuvants filmogènes ; des additifs d'ajustement rhéologique et des agents ignifuges.

22. Procédé pour la préparation d'une matière de revêtement selon l'une quelconque des revendications 1 à 21, **caractérisé en ce qu'**on mélange entre eux les composants (A) à (F) ainsi qu'éventuellement (G) à (J) de la matière de revêtement et on homogénéise le mélange résultant.

23. Procédé selon la revendication 22, **caractérisé en ce que**
(1) on prépare un mélange, contenant les composants (A), (B) et (F) ainsi qu'éventuellement les composants (G) et/ou (H) et/ou une petite partie du composant (D),
(2) on disperse dans le mélange (1) le composant (C) et le composant (D) ou la majeure partie du composant (D) et
(3) on disperse le composant (E) dans le mélange (2).

24. Utilisation de la matière de revêtement selon l'une quelconque des revendications 1 à 21 et de la matière de revêtement préparée à l'aide du procédé selon la revendication 22 ou 23, pour la production de revêtements de rubans continus (*Coil-Coatings*).

25. Utilisation selon la revendication 24, **caractérisée en ce que** les *Coil-Coatings* sont des revêtements de peinture de finition ou Topcoats.
